# EUROPÄISCHE PATENTSCHRIFT

(11) **EP 3 016 761 B1**
(45) Veröffentlichungstag und Bekanntmachung des Hinweises auf die Patenterteilung: **03.05.2017**
(21) Anmeldenummer: 13734407.3
(22) Anmeldetag: 05.07.2013
(51) Int. Cl.: B21J 15/04, B21J 15/34, F16B 19/10

(54) **BLINDNIETANORDNUNG**
BLIND RIVET ASSEMBLY
ENSEMBLE DE RIVET AVEUGLE

(43) Veröffentlichungstag der Anmeldung: 11.05.2016
(73) Patentinhaber: GESIPA Blindniettechnik GmbH, 64546 Mörfelden-Walldorf (DE)
(72) Erfinder: GÄRTNER, Richard, 64546 Mörfelden-Walldorf (DE); BAMBERGER, Thomas, 64546 Mörfelden-Walldorf (DE); TORAMAN, Berkant, 64546 Mörfelden-Walldorf (DE)
(74) Vertreter: Knoblauch, Andreas
(86) Internationale Anmeldenummer: PCT/EP2013/064283
(87) Internationale Veröffentlichungsnummer: WO 2015/000532

(56) Entgegenhaltungen:
- WO-A1-2012/010858
- US-A- 2 706 039
- US-A- 2 930 503
- US-A- 4 338 714

## Beschreibung

Die Erfindung betrifft eine Blindnietanordnung mit mehreren Niethülsen, die hintereinander auf einem Nietdorn angeordnet sind, wobei der Nietdorn einen Nietdornkopf mit einem Außendurchmesser aufweist, der größer ist als ein Innendurchmesser der Niethülsen.

Eine derartige Blindnietanordnung ist auch als "Magazinniet" oder "Durchzugsniet" bekannt. Eine derartige Blindnietanordnung wird verwendet, wenn man mehrere Blindniete setzen möchte, ohne jedes Mal einen neuen Blindniet in eine Setzvorrichtung laden zu müssen.

Eine derartige Blindnietanordnung ist beispielsweise aus US 2 930 503 A bekannt. Hier wird der Nietdorn nur für einen Satz Blindniete verwendet, die auf dem Nietdorn angeordnet sind.

US 4 338 714 A beschreibt ebenfalls eine derartige Blindnietanordnung. Hier werden die Blindniete zunächst auf einer Kunststoffhülse gesammelt, die hohl ist. Danach wird der Nietdorn in die Kunststoffhülse eingesteckt und die Blindniete können von der Kunststoffhülse auf den Nietdorn überführt werden.

Eine weitere Blindnietanordnung dieser Art ist aus WO 2012/010858 A1 bekannt.

US 2 706 039 A zeigt eine Packung mit einer Reihe von hintereinander angeordneten Blindniethülsen. Bevor die Blindniete verpackt werden, werden sie auf einen Nietdorn aufgefädelt. Wenn die Verpackung hergestellt ist, kann der Nietdorn entfernt werden. Vor dem Verarbeiten der Blindniete muss der Nietdorn wieder in die Niethülsen eingeführt werden. Erst danach wird die Packung geöffnet.

Beim Setzen eines Blindniets dieser Blindnietanordnung wird zunächst die dem Nietdornkopf benachbarte Niethülse in die Öffnung eingeführt, in der der Blindniet gesetzt werden soll, und zwar solange, bis der Setzkopf der Niethülse an der Umgebung der Öffnung anliegt. Danach wird der Nietdorn mit einer Zugkraft beaufschlagt. Der Nietdornkopf schlüpft dann in die Niethülse ein und bildet einen Schließkopf. Im Gegensatz zu anderen Blindnieten reißt der Nietdorn jedoch nicht ab, sondern der Nietdornkopf wird durch die Niethülse vollständig hindurchgezogen. Dies hat zur Folge, dass nach dem Setzen des Niets die nächste Niethülse dem Nietdornkopf benachbart ist und die Niethülsenanordnung auf die gleiche Art und Weise gesetzt werden kann wie die erste Niethülse.

Der Nietdornkopf muss in der Lage sein, die Niethülse zur Ausbildung des Schließkopfes in ausreichendem Maße zu verformen und nach der Ausbildung des Schließkopfes durch die Niethülse hindurch zu schlüpfen. Andererseits muss der Nietdorn eine gewisse Länge aufweisen, um eine ausreichende Anzahl von Niethülsen aufnehmen zu können. Dies bedeutet einen erheblichen Herstellungsaufwand und damit einhergehend auch erhebliche Herstellungskosten. Bei einer Einsparung von Materialkosten besteht das Risiko, dass die Nieten nicht mehr gut und sicher gesetzt werden können.

Der Erfindung liegt die Aufgabe zugrunde, eine gut zu verarbeitende Blindnietanordnung kostengünstig herstellen zu können.

Diese Aufgabe wird bei einer Blindnietanordnung der eingangsgenannten Art dadurch gelöst, dass der Nietdorn und der Nietdornkopf als voneinander getrennt hergestellte Teile ausgebildet sind, die miteinander verbunden sind.

Bei dieser Ausgestaltung kann man jedes der beiden Teile Nietdorn und Nietdornkopf im Hinblick auf die jeweiligen Anforderungen an dieses Teil herstellen. So muss der Nietdorn praktisch ausschließlich ausreichende Zugkräfte übertragen können. Der Nietdornkopf muss hingegen zur Umformung der Niethülse, d. h. zum Ausbilden des Schließkopfes, geeignet sein. Wenn man die beiden Teile getrennt voneinander herstellt, dann kann man auf diese Anforderungen Rücksicht nehmen.

Vorzugsweise sind der Nietdorn und der Nietdornkopf aus unterschiedlichen Materialen gebildet. Auch durch die Materialwahl kann man den Anforderungen Rechnung tragen. So kann man beispielsweise den Nietdornkopf härter ausbilden als den Nietdorn. Da eine höhere Härte vielfach mit einer höheren Sprödigkeit einhergeht, die wiederum zu einer Bruchgefahr beim Nietdorn führen würden, kann man beispielsweise den Nietdornkopf härter als den Nietdorn machen.

Bevorzugterweise ist der Nietdorn aus einem Federstahl gebildet. Ein Federstahl ist außen fest genug, um eine Verbindung mit dem Nietdornkopf eingehen zu können. Im Inneren ist der Federstahl ausreichend zäh, um die gewünschten Zugkräfte über den Nietdornkopf auf die Niethülse zu übertragen und diese zu verformen.

Vorzugsweise ist der Nietdorn in den Nietdornkopf eingesteckt. Dies erleichtert die Herstellung einer Verbindung zwischen dem Nietdorn und dem Nietdornkopf.

Hierbei ist bevorzugt, dass der Nietdorn durch den Nietdornkopf hindurchragt. Man kann dann eine Verbindung oder einen Teil der Verbindung zwischen dem Nietdorn und dem Nietdornkopf auf dem aus dem Nietdornkopf herausragenden Ende vorsehen.

Vorzugsweise ist der Nietdornkopf als Ring ausgebildet. Ein derartiger Ring kann beispielweise eine kreis- oder zylinderförmige Außenkontur aufweisen. Er kann jedoch auch eine beliebig andere Außenkontur aufweisen, beispielsweise ein Polygon, insbesondere ein Viereck, Sechseck, Achteck oder dergleichen. Die Kontur des Nietdornkopfes kann in weiten Grenzen frei gewählt werden.

Bevorzugterweise sind der Nietdorn und der Nietdornkopf lösbar miteinander verbunden. Man kann dann beispielsweise einen Nietdorn mit unterschiedlichen Nietdornköpfen mehrfach verwenden oder man kann einen Nietdornkopf öfter verwenden als den Nietdorn. Man ist auch in der Lage, relativ schnell eine Anpassung des Nietdornkopfes und gegebenenfalls auch der Niethülsen an die gegebene Verbindungsaufgabe anzupassen.

Vorzugsweise weisen der Nietdorn und der Nietdornkopf zumindest in eine Zugrichtung eine formschlüssige Verbindung miteinander auf. Die Zugrichtung entspricht der Längsrichtung des Nietdornes und zwar in Richtung vom Nietdornkopf zu den Niethülsen hin. Lediglich in diese Richtung muss die Verbindung in der Lage sein, Zugkräfte übertragen zu können. Ein Formschluss kann beispielsweise dadurch gebildet sein, dass der Nietdorn an dem aus dem Nietdornkopf herausragenden Ende gestaucht ist, um seinen Durchmesser zu vergrößern.

Eine alternative Ausgestaltung einer formschlüssigen Verbindung kann vorsehen, dass der Nietdornkopf auf den Nietdorn aufgeschraubt ist.

Alternativ oder zusätzlich kann vorgesehen sein, dass der Nietdornkopf auf dem Nietdorn aufgepresst oder aufgeschrumpft ist. Auch in diesem Fall kann der Nietdorn im Bereich des Nietdornkopfes schon mit einer Ausformung versehen sein, beispielsweise einer umlaufenden Rille oder einem umlaufenden Vorsprung, so dass zusätzlich zu der Press- oder Schrumpfverbindung auch ein Formschluss erzeugt werden kann.

Schließlich ist es auch möglich, dass der Nietdornkopf und der Nietdorn miteinander verklebt, verlötet oder verschweißt werden, wobei man beim Schweißen insbesondere eine Reibschweißverbindung herstellen kann. Auch damit lassen sich die notwendigen Zugkräfte vom Nietdorn auf den Nietdornkopf übertragen, um einen Teil der Niethülse zu einem Schließkopf umzuformen und den Nietdornkopf danach durch die Niethülse hindurchschlupfen zu lassen.

Vorzugsweise weist der Nietdornkopf eine konische Umfangsfläche auf. Der Nietdornkopf weist also an seinem der Niethülse benachbarten Ende einen geringeren Außendurchmesser als am gegenüberliegenden Ende auf. Dies erleichtert es dem Nietdornkopf, in die Niethülse einzutreten.

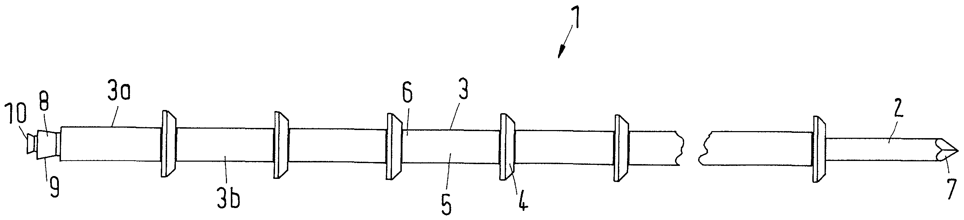

Die Erfindung wird im Folgenden anhand eines bevorzugten Ausführungsbeispiels in Verbindung mit der Zeichnung beschrieben. Hierin zeigt:
- die einzige Fig.: eine schematische Darstellung einer Blindnietanordnung.

Eine Blindnietanordnung 1 weist einen Nietdorn 2 auf, auf den hintereinander mehrere Niethülsen 3 aufgefädelt sind. Jede Niethülse 3 weist einen Setzkopf 4 und einen Schaft 5 auf. Der Schaft 5 ist im Wesentlichen hohlzylinderförmig ausgebildet. An seinem dem Setzkopf 4 gegenüberliegenden Ende ist der Schaft 5 unverformt. Hier wird später ein Schließkopf ausgebildet, wie es an sich bekannt ist. Dieses Ende des Schaftes 5 wird daher als schließkopfseitiges Ende 6 bezeichnet.

Die Niethülsen 3 haben auf dem Nietdorn 2 alle die gleiche Ausrichtung, d. h. ein Setzkopf 4 liegt (mit Ausnahme der letzten Niethülse) immer an einem schließkopfseitigen Ende 6 einer benachbarten Niethülse 3 an.

Der Nietdorn 2 weist ein Zugende 7 auf, das aus dem Setzkopf 4 der letzten Niethülse 3 (in der Fig. rechts) herausragt. Am anderen Ende weist der Nietdorn 2 einen Nietdornkopf 8 auf. Wie zu erkennen ist, hat der Nietdornkopf 8 eine konische Umfangsfläche 9. Der Nietdornkopf 8 weist also an seinem den Niethülsen 3 benachbarten Ende einen Durchmesser auf, der kleiner ist als ein Innendurchmesser des Schaftes 5 der Niethülsen 3, und am anderen Ende einen Durchmesser auf, der größer ist als der Innendurchmesser des Schaftes 5 der Niethülsen 3.

Wenn man also eine ausreichende Zugkraft auf den Zugdorn 2 am Zugende 7 ausübt, dann schlüpft der Nietdornkopf 8 in die erste Niethülse 3a ein, bildet dort einen Schließkopf aus und wird dann weiter durch die erste Niethülse 3a hindurchgezogen, so dass dann die zweite Niethülse 3b den Platz der ersten Niethülse 3a einnimmt. Dies ist an sich bekannt.

Der Nietdornkopf 8 ist getrennt vom Nietdorn 2 gefertigt. Nach der Fertigung von Nietdornkopf 8 und Nietdorn 2 werden der Nietdornkopf 8 und der Nietdorn 2 miteinander verbunden. Der Nietdornkopf 8 ist hierbei als Ring ausgebildet, in den der Nietdorn 2 hineingesteckt ist, wobei er durch den Nietdornkopf 8 vorzugsweise hindurchragt.

Der Nietdorn 2 kann aus einem Federstahl gebildet sein. Federstahl hat den Vorteil, dass er außen fest und innen in ausreichendem Maße zäh ist, um die notwendigen Zugkräfte auf den Nietdornkopf 8 und auf die Niethülsen 3 übertragen zu können. Er lässt sich allerdings nur mit gewissen Schwierigkeiten in eine Form bringen, die man für den Nietdornkopf 8 gerne hätte. Durch die getrennten Herstellungsmöglichkeiten lässt sich dieses Problem auf elegante Weise umgehen. Man kann den Nietdornkopf 8 aus einem anderen Material bilden als den Nietdorn 2, so dass man hier in der Formgebung eine relativ große Freiheit hat. So muss der Nietdornkopf 8 beispielsweise nicht unbedingt eine runde oder kreisförmige Außenkontur haben, sondern er kann beispielsweise auch polygonartig ausgebildet sein.

Im vorliegenden Ausführungsbeispiel weist der Nietdorn 2 an dem Ende, dass durch den Nietdornkopf 8 hindurchragt, eine Verdickung 10 auf, die mit dem Nietdornkopf 8 einen Formschluss in Zugrichtung bildet. Die Verdichtung 10 kann beispielsweise durch einen Stauchvorgang hergestellt werden. Die Verdichtung 10 kann in ausreichendem Maße Zugkräfte vom Nietdorn 2 auf dem Nietdornkopf 8 übertragen, wenn der Nietdorn 2 in Zugrichtung, d. h. in der Zeichnung nach rechts, gezogen wird. In die entgegengesetzte Bewegungsrichtung des Nietdorns 2 ist eine Kraftübertragung nicht unbedingt erforderlich. In diese Richtung kann daher die Verbindung zwischen dem Nietdornkopf 8 und dem Nietdorn 2 aufgehoben werden, so dass der Nietdorn 2 und der Nietdornkopf 8 lösbar miteinander verbunden sind.

Eine derartige lösbare Verbindung gestattet es, einen Nietdorn 2 mit unterschiedlichen Nietdornköpfen 8 zu verwenden, so dass die Nietdornköpfe 8 leicht an unterschiedliche Niethülsen 3 angepasst werden können, beispielweise an unterschiedliche Durchmesser, oder an unterschiedliche Materialien der Niethülsen 3.

Es ist auch möglich, einen Nietdornkopf 8 öfter zu verwenden als den Nietdorn 2 oder den Nietdorn 2 öfter zu verwenden als den Nietdornkopf 8. Da man in diesem Fall den Nietdorn 2 und den Nietdornkopf 8 nicht gemeinsam entsorgen muss, wenn eines der beiden Teile unbrauchbar geworden ist, kann man wiederum Kosten sparen.

Eine andere Möglichkeit, den Nietdornkopf 8 mit dem Nietdorn 2 zu verbinden besteht darin, den Nietdornkopf 8 auf den Nietdorn 2 aufzuschrauben.

Auch ist es möglich, den Nietdornkopf 8 auf den Nietdorn 2 aufzupressen oder aufzuschrumpfen, wobei in diesem Fall das Lösen der Verbindung zwischen dem Nietdornkopf 8 und dem Nietdorn 2 aufwendiger ist.

Man kann auch den Nietdornkopf 8 und den Nietdorn 2 miteinander verkleben, verlöten oder verschweißen. Zum Verschweißen eignet sich insbesondere ein Reibschweißen, bei dem der Nietdorn 2 und der Nietdornkopf 8 relativ zueinander gedreht werden, und zwar so, dass durch die Reibungswärme zwischen dem Nietdornkopf 8 und dem Nietdorn 2 eine Schweißtemperatur erzeugt wird.

## Patentansprüche

1. Blindnietanordnung (1) mit mehreren Niethülsen (3, 3a, 3b), die hintereinander auf einem Nietdorn (2) angeordnet sind, wobei der Nietdorn (2) einen Nietdornkopf (8) mit einem Außendurchmesser aufweist, der größer ist, als ein Innendurchmesser der Niethülsen (3, 3a, 3b), **dadurch gekennzeichnet, dass** der Nietdorn (2) und der Nietdornkopf (8) als voneinander getrennt hergestellte Teile ausgebildet sind, die miteinander verbunden sind.

2. Blindnietanordnung nach Anspruch 1, **dadurch gekennzeichnet, dass** der Nietdorn (2) und der Nietdornkopf (8) aus unterschiedlichen Materialien gebildet sind.

3. Blindnietanordnung nach Anspruch 2, **dadurch gekennzeichnet, dass** der Nietdorn (2) aus einem Federstahl gebildet ist.

4. Blindnietanordnung nach einem der Ansprüche 1 bis 3, **dadurch gekennzeichnet, dass** der Nietdorn (2) in den Nietdornkopf (8) eingesteckt ist.

5. Blindnietanordnung nach Anspruch 4, **dadurch gekennzeichnet, dass** der Nietdorn (2) durch den Nietdornkopf (8) hindurch ragt.

6. Blindnietanordnung nach einem der Ansprüche 1 bis 5, **dadurch gekennzeichnet, dass** der Nietdornkopf (8) als Ring ausgebildet ist.

7. Blindnietanordnung nach einem der Ansprüche 1 bis 6, **dadurch gekennzeichnet, dass** der Nietdorn (2) und der Nietdornkopf (8) lösbar miteinander verbunden sind.

8. Blindnietanordnung nach einem der Ansprüche 1 bis 7, **dadurch gekennzeichnet, dass** der Nietdorn (2) und der Nietdornkopf (8) zumindest in eine Zugrichtung eine formschlüssige Verbindung miteinander aufweisen.

9. Blindnietanordnung nach Anspruch 8, **dadurch gekennzeichnet, dass** der Nietdornkopf (8) auf den Nietdorn (2) aufgeschraubt ist.

10. Blindnietanordnung nach einem der Ansprüche 1 bis 9, **dadurch gekennzeichnet, dass** der Nietdornkopf (8) auf den Nietdorn (2) aufgepresst oder aufgeschrumpft ist.

11. Blindnietanordnung nach einem der Ansprüche 1 bis 10, **dadurch gekennzeichnet, dass** der Nietdornkopf (8) und der Nietdorn (2) miteinander verklebt, verlötet oder verschweißt, insbesondere reibverschweißt, sind.

12. Blindnietanordnung nach einem der Ansprüche 1 bis 11, **dadurch gekennzeichnet, dass** der Nietdornkopf (8) eine konische Umfangsfläche (9) aufweist.

## Claims

1. Blind rivet arrangement (1) having multiple rivet sleeves (3, 3a, 3b) which are arranged in succession on a rivet mandrel (2), wherein the rivet mandrel (2) comprises a rivet mandrel head (8) with an outer diameter that is larger than an inner diameter of the rivet sleeves (3, 3a, 3b), **characterized in that** the rivet mandrel (2) and the rivet mandrel head (8) are embodied as parts produced separately from one another which are connected to one another.

2. Blind rivet arrangement according to claim 1, **characterized in that** the rivet mandrel (2) and the rivet mandrel head (8) are formed from different materials.

3. Blind rivet arrangement according to claim 2, **characterized in that** the rivet mandrel (2) is formed from a spring steel.

4. Blind rivet arrangement according to one of claims 1 through 3, **characterized in that** the rivet mandrel (2) is inserted into the rivet mandrel head (8).

5. Blind rivet arrangement according to claim 4, **characterized in that** the rivet mandrel (2) projects through the rivet mandrel head (8).

6. Blind rivet arrangement according to one of claims 1 through 5, **characterized in that** the rivet mandrel head (8) is embodied as a ring.

7. Blind rivet arrangement according to one of claims 1 through 6, **characterized in that** the rivet mandrel (2) and the rivet mandrel head (8) are releasably connected to one another.

8. Blind rivet arrangement according to one of claims 1 through 7, **characterized in that** the rivet mandrel (2) and the rivet mandrel head (8) comprise, at least in a pulling direction, a positive-fit connection to one another.

9. Blind rivet arrangement according to claim 8, **characterized in that** the rivet mandrel head (8) is screwed onto the rivet mandrel (2).

10. Blind rivet arrangement according to one of claims 1 through 9, **characterized in that** the rivet mandrel head (8) is pressed or shrink-fitted onto the rivet mandrel (2).

11. Blind rivet arrangement according to one of claims 1 through 10, **characterized in that** the rivet mandrel head (8) and the rivet mandrel (2) are bonded, soldered or welded, in particular friction welded, to one another.

12. Blind rivet arrangement according to one of claims 1 through 11, **characterized in that** the rivet mandrel head (8) comprises a conical circumferential surface (9).

## Revendications

1. Disposition de rivets aveugles (1) avec plusieurs douilles de rivets (3, 3a, 3b), qui sont disposées les unes derrières les autres sur un mandrin à rivet (2), le mandrin de rivet (2) comprenant une tête de mandrin de rivet (8) avec un diamètre externe qui est supérieur à un diamètre interne des douilles de rivets (3, 3a, 3b), **caractérisé en ce que** le mandrin de rivet (2) et la tête de mandrin de rivet (8) sont conçus comme des pièces fabriquées séparément les unes des autres qui sont reliées entre elles.

2. Disposition de rivets aveugles selon la revendication 1, **caractérisée en ce que** le mandrin de rivet (2) et la tête de mandrin de rivet (8) sont constitués de différents matériaux.

3. Disposition de rivets aveugles selon la revendication 2, **caractérisée en ce que** le mandrin de rivet (2) est constitué d'un acier ressort.

4. Disposition de rivets aveugles selon l'une des revendications 1 à 3, **caractérisée en ce que** le mandrin de rivet (2) est emboîté dans la tête de mandrin de rivet (8).

5. Disposition de rivets aveugles selon la revendication 4, **caractérisée en ce que** le mandrin de rivet (2) dépasse à travers la tête de mandrin de rivet (8).

6. Disposition de rivets aveugles selon l'une des revendications 1 à 5, **caractérisée en ce que** la tête de mandrin de rivet (8) est conçue comme une bague.

7. Disposition de rivets aveugles selon l'une des revendications 1 à 6, **caractérisée en ce que** le mandrin de rivet (2) et la tête de mandrin de rivet (8) sont reliés entre eux de manière amovible.

8. Disposition de rivets aveugles selon l'une des revendications 1 à 7, **caractérisée en ce que** le mandrin de rivet (2) et la tête de mandrin de rivet (8) comprennent au moins une liaison par complémentarité de forme dans un sens de traction.

9. Disposition de rivets aveugles selon la revendication 8, **caractérisée en ce que** la tête de mandrin de rivet (8) est vissée sur le mandrin de rivet (2).

10. Disposition de rivets aveugles selon l'une des revendications 1 à 9, **caractérisée en ce que** la tête de mandrin de rivet (8) est pressée ou rétractée sur le mandrin de rivet (2).

11. Disposition de rivets aveugles selon l'une des revendications 1 à 10, **caractérisée en ce que** la tête de mandrin de rivet (8) et le mandrin de rivet (2) sont collés, brasés ou soudés, plus particulièrement soudés par friction entre eux.

12. Disposition de rivets aveugles selon l'une des revendications 1 à 11, **caractérisée en ce que** la tête de mandrin de rivet (8) présente une surface périphérique (9) conique.
